# EUROPEAN PATENT APPLICATION

(11) **EP 2 787 708 A1**
(43) Date of publication of application: **08.10.2014**
(21) Application number: 13161960.3
(22) Date of filing: 02.04.2013
(51) Int. Cl.: H04L 29/06, H04M 3/56, H04L 29/08

(54) **Method and system for switching between collaborative applications**

(71) Applicant: BlackBerry Limited, Waterloo, ON N2K 0A7 (CA)
(72) Inventor: Pfeifer, Thomas, Waterloo, Ontario N2L 3W8 (CA)
(74) Representative: Moore, Barry

(57) **Abstract**

Systems and methods are provided for switching collaborative applications. An example method comprises executing a first communication device and a second communication device associate with at least one contact, receiving an instruction to continue the collaborative session using the selected collaborative application that is different from the first collaborative application, determining whether the at least one contact is capable of continuing the collaborative session using the selected collaborative application, and terminating the first collaborative application.

## Description

### BACKGROUND

The present disclosure relates generally to switching between collaborative applications running on communication devices.

Collaborative applications run on a variety of communication devices, such as mobile phones, tablets, personal digital assistants (PDA's) or laptop computers. Collaborative applications include any application that facilitates information exchange between users. A collaborative application may be a voice-capable collaborative application, a message-capable collaborative application, or a combination voice- and message-capable collaborative application. Voice-capable collaborative applications enable users to speak and listen in real-time or near real-time to one or more contacts and include, for example, telephone call applications and video call applications. Message-capable collaborative applications enable users to send and receive data, including text messages, voice messages, data files, or any combination of those, to one or more contacts, and include, for example, email applications, messaging applications such as SMS, and social networking applications, amongst multitudes of others.

Communication device users may select the collaborative application to use for a collaborative session with a target contact by invoking a contact application (*e.g.*, an application for managing contact information) on the communication device, locating the stored information relating to a target contact, and selecting a stored identifier for the target contact corresponding to the desired collaborative application. Selecting, for example, a telephone number for a target contact would cause the communication device to launch a voice-capable collaborative application to call the telephone number and enable voice communication between the calling device and the device associated with the called telephone number. Alternatively, communication device users invoke a collaborative application itself and then select the target contact from a list of contacts within that collaborative application, or manually enter information about the target contact (*e*.*g*., the target contact's telephone number).

### BRIEF DESCRIPTION OF THE DRAWINGS

This specification will now describe embodiments of the present disclosure, by way of example only, by referring to the attached figures, described below.

FIG. 1 is a block diagram of an example communication device.

FIG. 2 is a flowchart of an example method for switching collaborative applications.

FIG. 3A is a flowchart of an example method for receiving an instruction to continue a collaborative session using a selected collaborative application.

FIG. 3B is an example application interface.

FIG. 4A is a flowchart of an example method for determining whether a contact is capable of continuing a collaborative session.

FIGS. 4B, 4C, and 4D show example collaborative application listings.

FIG. 5 shows an example application interface and notification.

### DETAILED DESCRIPTION

For simplicity and clarity of illustration, where considered appropriate, this specification repeats reference numerals among the figures to indicate corresponding or analogous elements. In addition, this specification provides numerous specific details to provide a thorough understanding of the described embodiments. In some instances, aspects of this disclosure may be practiced without some specific details. In other instances, well-known methods, procedures, and components have not been described in detail so as not to obscure the described embodiments. Also, the described embodiments do not limit the claims or the scope of the embodiments.

When using communication devices to collaborate with one or more contacts, users may wish to switch among available collaborative applications. For example, a user may be engaged in a telephone call with a contact, but for privacy or other reasons, may want to continue the collaborative session using a message-capable collaborative application such as SMS. For another example, because the user may have obtained access to an improved network connection, the user may want to continue the collaborative session using a different voice-capable application such as a video application. For another example, a user may be engaged in an email with multiple contacts and may wish to continue collaborating in a telephone conference call with one or more of those contacts.

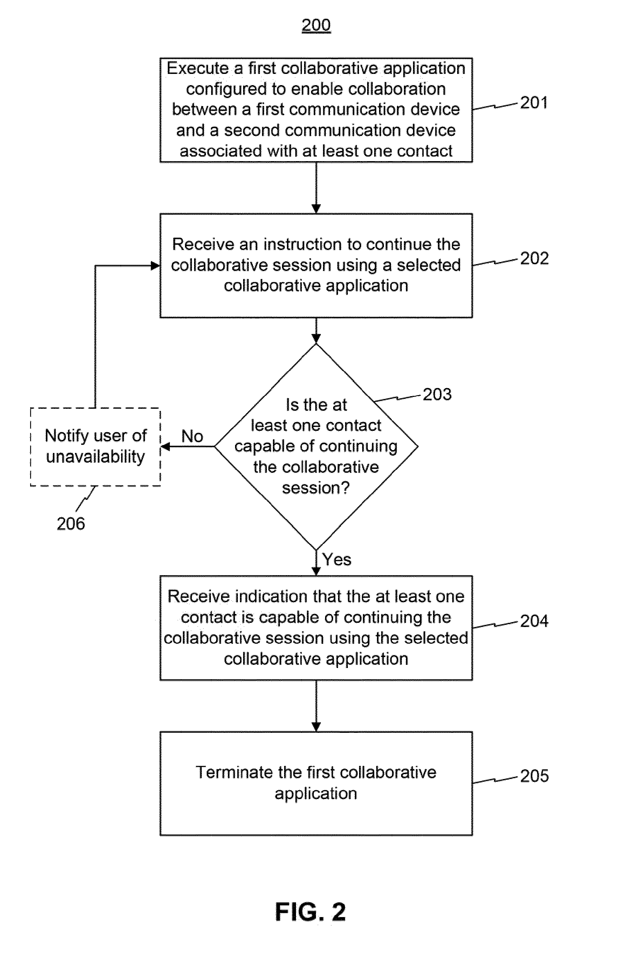

Communication device users may store identifiers relating to the collaborative applications of the users' contacts in the memory associated with their communication devices, for example, in a vCard. The stored identifier(s) may include, for example, email addresses, telephone numbers, and social networking handles or screen names, and any other information used by a collaborative application to identify a contact. The identifiers relating to the collaborative applications of the user's contacts may also or alternatively be stored remotely on a network, or determined by a user's device or network during operation in accordance with the processes disclosed in connection with FIGs. 2-5.

Examples of communication devices according to this disclosure include personal computers (PCs), laptops, workstations, mobile or handheld wireless communication devices such as pagers, cellular phones, cellular smartphones, wireless organizers, personal digital assistants, wirelessly enabled notebook computers, and the like. The communication device is a two-way communication device with data-communication capabilities, including the capability to communicate with other communication devices or computer systems through a network. Depending on the functionality provided by the communication device, it might be referred to as a data-messaging device, a tablet, a cellular telephone, a wireless Internet appliance, or a data-communication device (with or without telephony capabilities).

In some instances, a communication device user may wish to switch collaborative applications and may not know which collaborative applications the one or more contacts with whom he is collaborating with are possible for continued collaboration. The need for the user to invoke a contact management application or second collaborative application himself, only to discover that the contact is not available to collaborate in the second collaborative application, or to discover that the contact is unavailable to collaborate in the second collaborative application, could interrupt the collaborative efforts of the user and contacts, or could be otherwise inefficient. If the first application remains running once a collaboration has switched to the second collaborative application or after the participants have agreed to switch to a second collaborative application, this may result in wasted system and network resources, and may result in unnecessary financial burden to the participants.

According to one disclosed embodiment, a method for switching collaborative applications comprises executing a first collaborative application configured to enable a collaborative session between the first communication device and a second communication device associated with at least one contact and receiving an instruction to continue the collaborative session using a selected collaborative application that is different from the first collaborative application. The method also comprises determining whether the at least one contact is capable of continuing the collaborative session using the selected collaborative application. The method further comprises terminating the first collaborative application. In additional embodiments terminating the first application occurs after establishing continued collaboration using the second collaborative application.

In another disclosed embodiment, a communication device includes a display device, one or more processors, one or more memories, and instructions to one or more memories. The instructions, when executed by the one or more processors, cause the communication device to perform the steps of: executing a first collaborative application configured to enable a collaborative session between the first communication device and a second communication device associated with at least one contact, receiving an instruction to continue the collaborative session using a selected collaborative application that is different from the first collaborative application, determining whether the at least one contact is capable of continuing the collaborative session using the selected collaborative application, and terminating the first collaborative application.

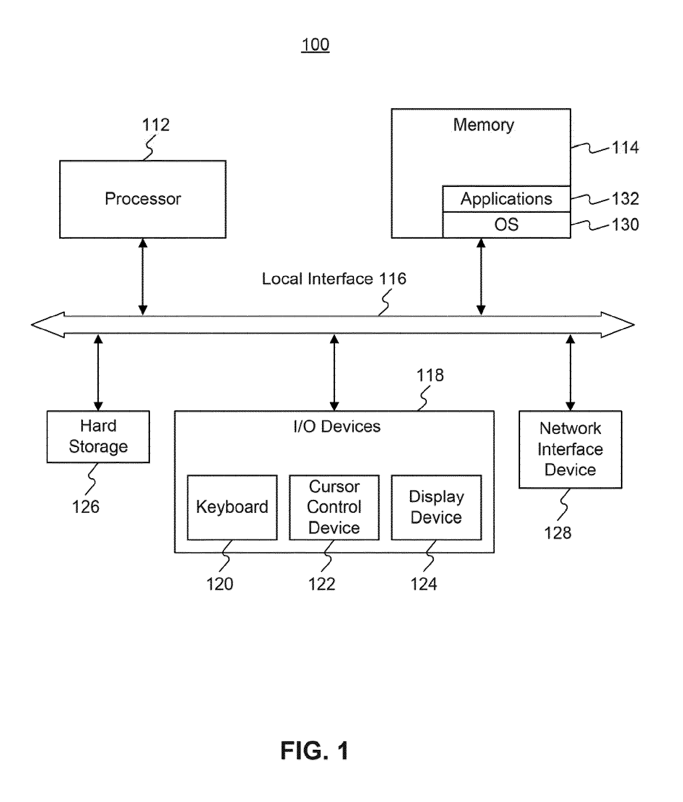

Reference is now made to FIG. 1, which is a block diagram of a communication device 100 according to one embodiment. The communication device 100 includes a processor 112 and a memory 114 coupled to a local interface 116. One or more input/output (I/O) devices 118, such as a keyboard 120, cursor-control device 122, and display device 124, are connected to local interface 116. Additionally, storage 126 and a network-interface device 128 are also shown.

Illustrated within memory 114 in FIG. 1 are operating system (OS) 130 and applications 132, both executable by processor 112. OS 130 is a software (or firmware) component of communication device 100 that provides an environment for the execution of programs by providing specific services to the programs, including loading the programs into memory 114 and running the programs. OS 130 also manages the sharing of internal memory resources among multiple applications and/or processes, and handles input and output control, file and data management, communication control, and related services. Application programs make requests for services to OS 130 through an application-program interface (not shown).

With reference again to FIG. 1, processor 112 is a hardware device for executing software located in memory 114, and is any custom-made or commercially available processor, a central-processing unit (CPU), a semiconductor-based microprocessor, a macro processor, or generally any device for executing software instructions. Memory 114 includes any one or a combination of volatile-memory elements (*e*.*g*., random-access memory (RAM, such as DRAM, SRAM, SDRAM, etc.)) and nonvolatile-memory elements (*e*.*g*., ROM, hard drive, tape, CDROM, DVDROM, etc.). In some embodiments, memory 114 incorporates electronic, magnetic, optical, and/or other types of storage media. Memory 114 may also have a distributed architecture, with various components situated remotely from one another, but accessible by processor 112.

Local interface 116 includes, for example, one or more buses or other wired or wireless connections, and may comprise additional elements, which are omitted for simplicity, such as controllers, buffers (caches), drivers, repeaters, and receivers. Further, local interface 116 includes address, control, and/or data connections to enable appropriate communications among components of communication device 100.

Input/output (I/O) devices 118 include any device configured to communicate with local interface 116. A keyboard 120, cursor-control device 122, and display device 124 are shown in FIG. 1. Additional input/output devices such as optical drives, cameras, I/O ports, printers, speakers, microphones, scanners, etc., could also be provided. In one embodiment, keyboard 120 is a virtual keyboard on a touch-screen display.

Cursor-control device 122 comprises any input device configured to cooperate with an application 132 and/or OS 130, and manipulate one or more cursor(s) displayed on display device 124. For example, cursor-control device 122 may include: a mouse, a trackball, a set of navigation keys (*e*.*g*., arrow keys), a touchpad, a joystick, or a touch-sensitive screen.

Communication device 100 is connected to a network, such as a cellular network or Internet, for example, via network-interface device 128. Network-interface device 128 may be any device configured to interface between communication device 100 and a computer or a network, such as a local or wide-area network, a private computer network, a public or private packet-switched or other data network, including the Internet, a circuit-switched network, or a wireless network.

In use, a received signal, such as a text message, an e-mail message, or web-page download, is processed by network interface device 128 and input to processor 112. Processor 112 then processes the received signal for output to display device 124. A user can also reply to such messages utilizing I/O devices 118 in combination with applications 132 stored in memory 114.

Applications 132 in FIG. 1 may include collaborative applications, and processor 112 may be configured to execute programs and applications configured in accordance with the example methods disclosed herein. Memory 114, Hard Storage 126, or other memory not depicted may be used to store software and data to facilitate the execution of the example methods disclosed herein.

FIG. 2 depicts an example method 200 performed by communication device 100. Method 200 begins with processor 112 executing a first collaborative application configured to enable a collaborative session between the first communication device and a second communication device associated with at least one contact (step 201). For example, processor 112 of communication device 100 may receive instructions from a touch-sensitive display to launch the first collaborative application. For example, communication device 100's user may provide instructions to make a telephone call to a contact, Mr. Smith, by touching a telephone number for Mr. Smith stored in the contact information relating to Mr. Smith. Such contact information may be stored in memory 114, hard storage 126, or in a remote location accessible via network interface device 128. The touch-sensitive display may then display graphics relating to the first collaborative application, such as graphics relating to a telephone call with Mr. Smith.

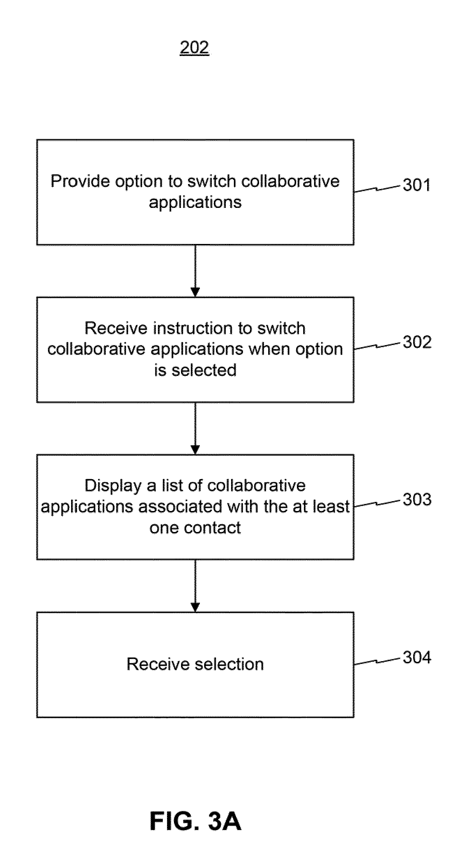

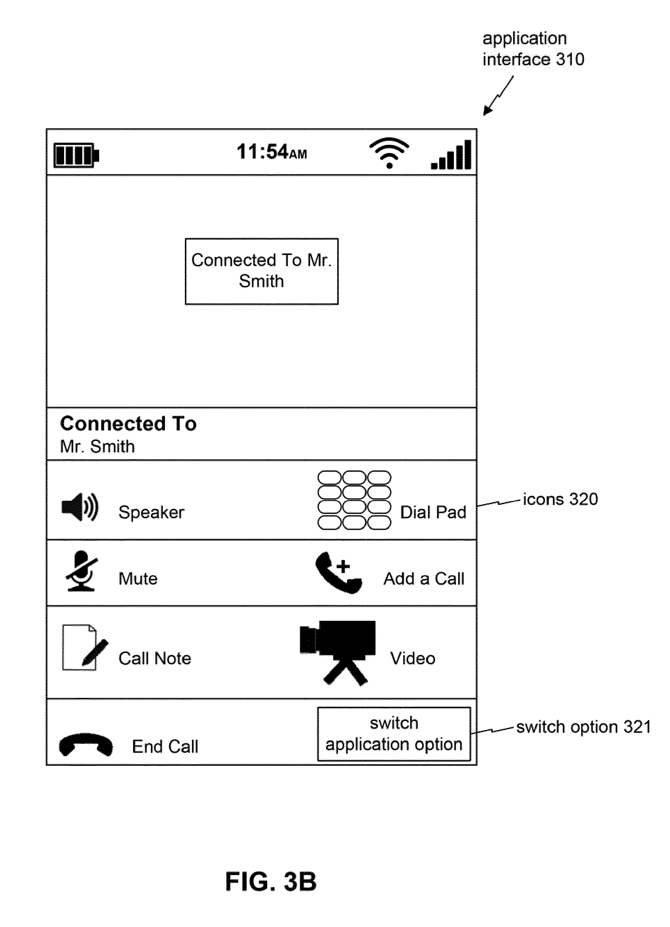

FIG. 3B shows example graphics relating to a telephone call with Mr. Smith on application interface 310. During the collaborative session, the user of the first communication device inputs an instruction to continue the collaborative session using a selected (second) collaborative application. The instruction is received in step 202. For example, processor 112 may receive an instruction to switch from the telephone call session with Mr. Smith to a text message session with Mr. Smith. FIG. 3A shows an example subroutine that may be performed in step 202, which is described in further detail below.

Returning to FIG. 2, in step 203, processor 112 checks whether the at least one contact is capable of continuing the collaborative session using the selected collaborative application, and if the contact is capable, receives an indication that the at least one contact is capable of continuing the collaborative session using the selected collaborative application in step 204. If the user is not capable of continuing the collaborative session using the selected collaborative application, the user may be notified of this in step 206. This checking may be a determination that a communication device associated with the contact can collaborate using the selected collaborative application. For example, if Mr. Smith is unable to receive text messages, the user may be notified that Mr. Smith is not available.

In such cases, the processor 112 may continue to execute the first collaborative application. Further, in some embodiments, the user may be prompted to select an alternative collaboration application. After receiving an indication that the user is capable of continuing in step 204, the processor 112 may terminate the first collaborative application in step 205. For example, processor 112 may receive an indication that Mr. Smith is available and the telephone call between the user and Mr. Smith may be terminated in step 205.

FIG. 3A shows an example subroutine that processor 122 may perform in connection with step 202 of FIG. 2. In step 301, processor 112 provides an option to switch collaborative applications. Such an option may be an icon on a touch-screen, and may be provided to the user on the interface for the first collaborative application. Application interface 310, depicted in FIG. 3B shows an example switch option 321. In alternative embodiments, a user may direct processor 112 to switch applications using a voice command or some other instruction mechanism. In still other embodiments, the instruction to switch collaborative applications may be automatic based on some change in state of any number of criteria. For example, if the method of network connection via network interface device 128 has changed (*e.g.*, the user has obtained a WiFi connection when the user previously had such a connection, has obtained a stronger WiFi connection, or obtained a connection to a private verses public network). Once the instruction to switch collaborative applications is received, in step 302, the processor may cause a list of collaborative applications to be displayed in step 303.

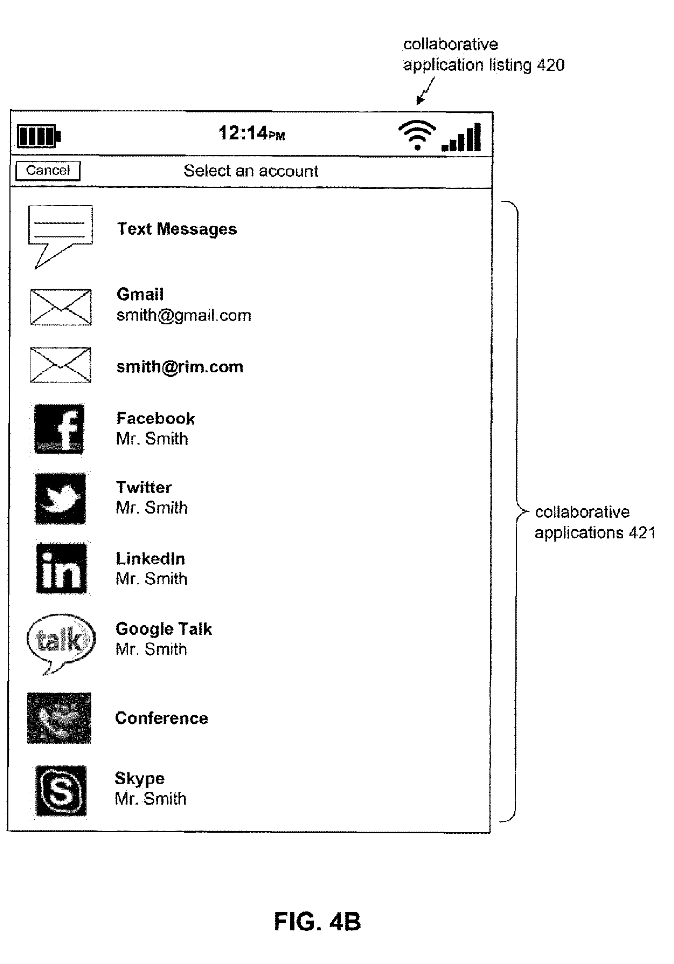

FIG. 4B depicts an example collaborative application listing 420, which lists collaborative applications 421, and which may be displayed in step 303. In some embodiments, the listing only displays the collaborative applications for which the contact has subscribed. For example, if the contact does not use "Twitter," the "Twitter" application would not be listed. The listing may be displayed in many different formats, including a format with multiple collaborative applications in a list, as shown in FIG. 4B, or may be displayed by showing one collaborative application at a time and allowing the user to scroll through the available collaborative applications. The collaborative application listing may, in some embodiments, consult the stored contact information for the contact, and may not necessarily invoke a contact application on the communication device to do so. From the collaborative application listing, the user may select one of the collaborative applications, and the processor 112 may receive the selection in step 304. For example, the user may select the "Facebook" collaborative application. In alternative embodiments, the user may select multiple collaborative applications, and processor 112 may check the contact's capability in one or more of the collaborative applications to present the user with only the collaborative applications in which the at least one contact is capable of continuing collaboration, or processor 112 may check the capability in one of the collaborative applications at a time until an indication is received that the contact is capable of collaborating using one of the collaborative applications. In such embodiments, the order in which the processor checks for capability in the multiple collaborative applications may be according to some priority schema.

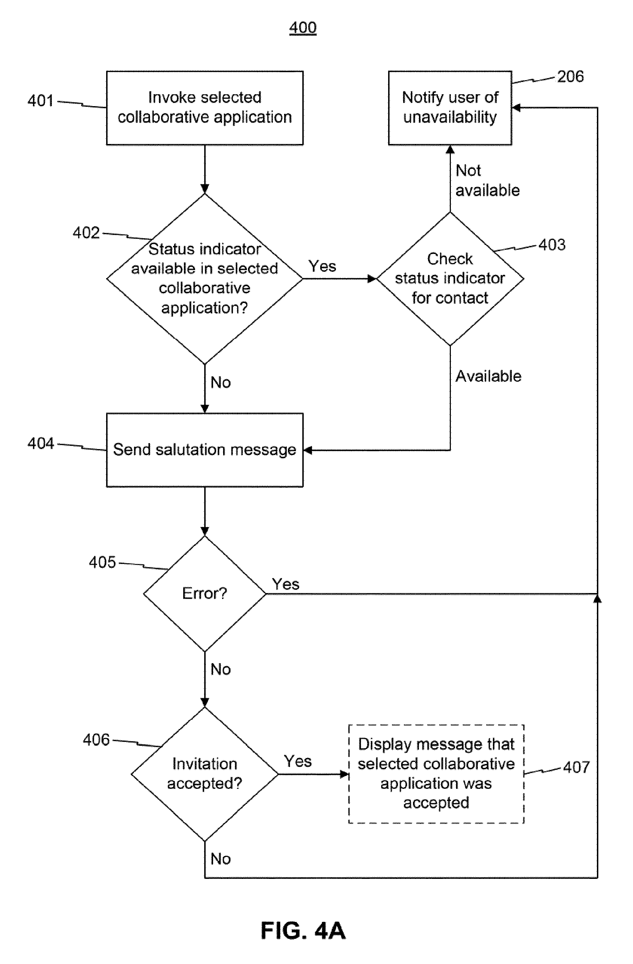

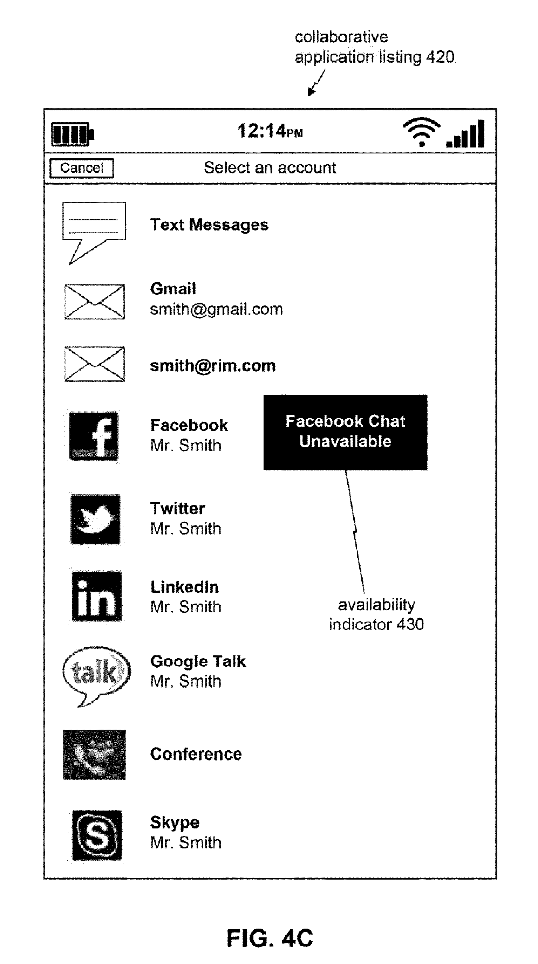

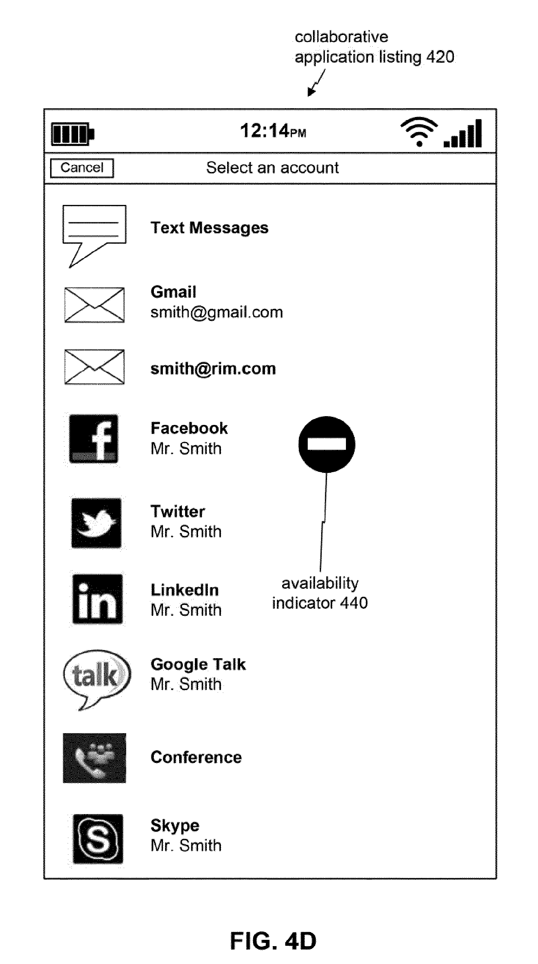

FIG. 4 shows an example method 400 that processor 122 may implement to check whether the at least one contact is capable of continuing collaboration, for example, in step 203 shown in FIG. 2. In some embodiments, this checking is performed using the selected collaborative application itself. In step 401 of method 400, the processor 112 invokes the selected application. For example, if the user selected "Facebook," the processor 112 may cause the Facebook application to launch in the background, while the first collaborative application, for example the telephone call with Mr. Smith, continues. When the user selects a collaborative application for which there is an associated status indicator, such as a flag that indicates whether a contact is available or not, the processor 112 may check the status indicator for the contact in step 403. Following the previous example, if the user selected "Facebook" the processor 112 may check the status indicator associated with Mr. Smith in the Facebook application, which indicates whether Mr. Smith is logged into Facebook and available for "Facebook Chat". Similar indicators are available in other collaborative applications. If the status indicator for the contact indicates that the contact is not available, the processor 112 may cause a notification to be displayed to the user in step 206.

FIGs. 4C and 4D depict example embodiments in which example availability indicators 430 or 440 notify the user that Mr. Smith is not available using the "Facebook Chat" application. If the status indicator, in step 403, shows that the contact is available, the method 400 may proceed to step 404. In alternative embodiments, if a contact is unavailable, that collaborative application may be removed from the listing presented to the user. When the contact is not available, the user may select an alternative collaborative application, and the method may be performed for each of the selected collaborative applications.

In step 404, processor 112 causes a salutation message to be sent to the contact. In some embodiments, the salutation message may be sent to the contact through the selected collaborative application. For example, the salutation message may be a Facebook chat message in the previous example, asking Mr. Smith if he would like to engage in a Facebook chat with the user (*e*.*g*., an invitation). For another example, the salutation message may be a text message in a text messaging application. Such a text message may be automatically composed. For example, the processor may be configured to send a message such as "USER wishes to continue collaborating via COLLABORATIVE APPLICATION NAME" (*e.g.*, Thomas would like to continue collaborating via text messaging, do you accept?"). If the routine encounters an error in step 405 sending the salutation message, the user may optionally be notified that the contact is not available in step 406. If the contact accepts the invitation, the user's communication device may optionally display a message that the invitation to continue collaborating using the selected collaborative application was accepted in step 407.

In some embodiments, the at least one contact may wish to continue the collaboration on a different communication device. For example, if Mr. Smith receives a notification that the user wishes to continue the collaborative session (begun as a telephone call to or from Mr. Smith's mobile phone) using "Facebook Chat", Mr. Smith may wish to continue the collaboration instead using a laptop computer rather than his mobile telephone. In such embodiments, Mr. Smith can indicate acceptance of the invitation from the alternative communication device, and then the collaborative session, when continued, would be established between the user's communication device and Mr. Smith's "new" communication device. For example, Mr. Smith may respond to the salutation message sent in step 404 using his laptop computer rather than his mobile telephone.

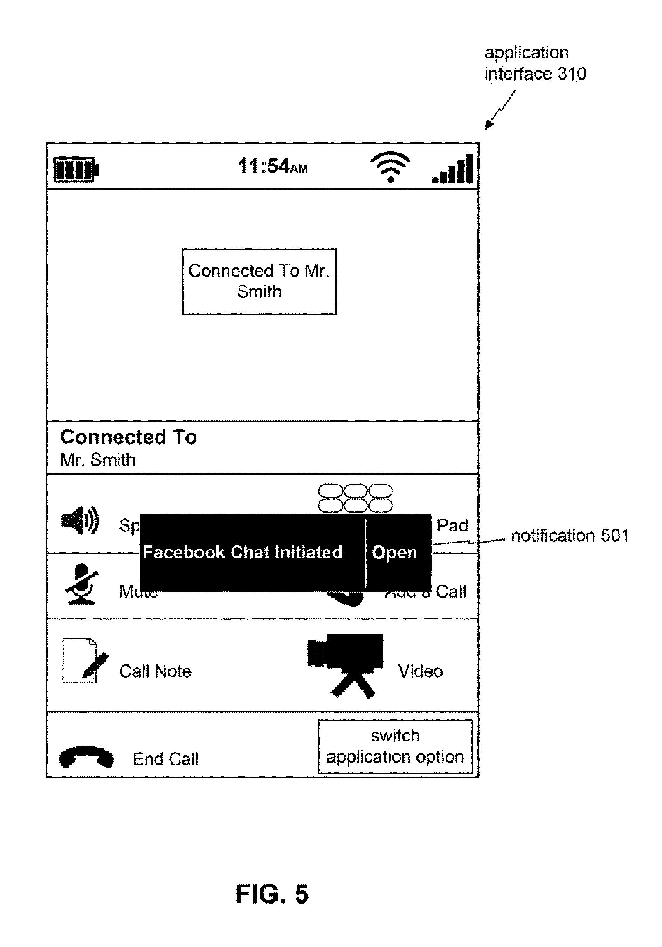

In some embodiments, optional step 407 is eliminated and no message is displayed for the user, and the first collaborative application is terminated and collaboration continues using the selected collaborative application. For example, if Mr. Smith accepts the invitation to collaborate using Facebook chat, the telephone call with Mr. Smith may be terminated and the user and Mr. Smith continue their collaboration using the Facebook Chat that had been invoked in step 401. In some embodiments, as shown in example application interface 310 in FIG. 5, the user may be notified via example notification 501 that the selected collaborative application has been accepted by the contact, and may optionally be prompted to also accept (*e.g.*, with the example "open" prompt shown in notification 501) the selected collaborative application. The first collaborative application may then be terminated following the user's indication that he has also accepted, for example, by touching the "open" prompt in notification 501.

In still further embodiments, the user may be collaborating in a first collaborative application with multiple contacts. For example, the first collaborative application may be an email application in which the user has sent an email to a plurality of contacts. In embodiments where a plurality of contacts are collaborating, the option to switch collaborative applications may be configured to select the only common collaborative application, if there is only one. In other embodiments, the option to switch collaborative applications may cause a listing of the common collaborative applications to be displayed for selection by the user. In one example, the user may wish to continue the collaboration in a telephone conference call. In such an embodiment, following the example method in FIG. 2, the instruction to continue the collaborative session using the selected collaborative application received in step 202 may cause the communication device to dial into a conference bridge with the user as the host of the conference call. Checking whether the at least one contact is capable of continuing the collaborative session in step 203 may comprise sending a message containing conference bridge information (dial-in information), soliciting each of the plurality of contacts to join the conference call. Step 202 may, for example, cause the communication device to send a calendar invitation from the user to the plurality of contacts, where the calendar invitation includes the conference bridge information and indicates a future time for the plurality of contacts and user to collaborate. In some embodiments, the calendar invitation may indicate the current time if the conference call is to happen immediately. Each of the plurality of contacts may be prompted to indicate whether they would agree to collaborate in the conference call, and that indication may be received in step 204. Once an indication has been received for each of the contacts, the first collaborative application may be terminated in step 205. In this example, the email application would be closed. Further, the communication devices of the contacts may automatically dial into the conference call as participants if the conference call is to begin immediately.

Embodiments are represented as a software product stored in a machine-readable medium (also referred to as a computer-readable medium, a processor-readable medium, or a computer-usable medium having a computer-readable program code embodied therein). The machine-readable medium is any suitable tangible medium, including a magnetic, optical, or electrical storage medium including a diskette, compact-disk read-only memory (CD-ROM), memory device (volatile or nonvolatile), or similar storage mechanism. The machine-readable medium can contain various sets of instructions, code sequences, configuration information, or other data, which, when executed, cause a processor to perform steps in a method according to an embodiment. Those of ordinary skill in the art will appreciate that other instructions and operations necessary to implement the described embodiments can also be stored on the machine-readable medium. Software running from the machine-readable medium can interface with circuitry to perform the described tasks.

While the embodiments here described are directed to particular implementations of the communication device and the method of controlling the communication device, one should understand that modifications and variations can occur to those skilled in the art. All such modifications and variations are believed to be within the sphere and scope of the present disclosure.

## Claims

1. A method performed by a first communication device, the method comprising:
executing a first collaborative application configured to enable a collaborative session between the first communication device and a second communication device associated with at least one contact;
receiving an instruction to continue the collaborative session using a selected collaborative application that is different from the first collaborative application;
determining whether the at least one contact is capable of continuing the collaborative session using the selected collaborative application; and
terminating the first collaborative application.

2. The method of claim 1, wherein the selected collaborative application is configured to enable the collaborative session between the first communication device and a third communication device associated with the at least one contact.

3. The method of claim 1 or 2, wherein terminating the first collaborative application occurs after the collaborative session is continued using the second collaborative application.

4. The method of any preceding claim, wherein the determining whether the at least one is capable of continuing the collaborative session using the selected collaborative application is made through the selected collaborative application.

5. The method of claim 4, wherein the determination is made by sending a salutation to the at least one contact through the selected collaborative application.

6. The method of claim 5, wherein the at least one contact is capable of continuing the collaborative session using the selected collaborative application when the at least one contact has received the salutation and has indicated agreement to collaborate.

7. The method of any preceding claim, wherein the determination is made by checking a status indicator in the selected collaborative application for the at least one contact.

8. The method of any preceding claim, wherein the first collaborative application is a voice-capable collaborative application.

9. The method of any preceding claim, wherein the second collaborative application is a message-capable collaborative application.

10. The method of any preceding claim, wherein the selected collaborative application is selected from a list of collaborative applications associated with the at least one contact.

11. The method of any preceding claim,
wherein the at least one contact is a plurality of contacts and the selected collaborative application comprises a conference call application,
wherein the instruction to continue the collaborative session causes the first communication device to dial into a conference bridge as a host; and
wherein the method further comprises:
sending a message containing conference bridge information soliciting each of the plurality of contacts to join the conference call, and
wherein the plurality of contacts are determined to be capable of continuing the collaborative session using the selected collaborative application when an indication has been received from each of the plurality of contacts that they have indicated agreement to collaborate in the conference call.

12. A communication device comprising:
a processor (112);
a memory (114) in electronic communication with the processor, the memory storing one or more routines (132) executable by the processor, the one or more routines being adapted to effect the method of any preceding claim.

13. A computer-readable storage medium storing one or more programs, the one or more programs comprising instructions, when executed by a computing device, that cause the device to effect the method of any one of claims 1 to 11
